(19) Europäisches Patentamt
European Patent Office
Office européen des brevets

(11) **EP 4 704 438 A1**

(12) **EUROPEAN PATENT APPLICATION**
published in accordance with Art. 153(4) EPC

(43) Date of publication:
**04.03.2026 Bulletin 2026/10**

(51) International Patent Classification (IPC):
*H04R 1/10* (2026.01)

(21) Application number: **23962952.0**

(52) Cooperative Patent Classification (CPC):
**H04R 1/10**

(22) Date of filing: **29.12.2023**

(86) International application number:
**PCT/CN2023/143666**

(87) International publication number:
**WO 2025/138278 (03.07.2025 Gazette 2025/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Shenzhen Shokz Co., Ltd.
Shenzhen, Guangdong 518108 (CN)**

(72) Inventor: **YUE, Gong
Shenzhen, Guangdong 518108 (CN)**

(74) Representative: **Wang, Bo
Panovision IP
Ebersberger Straße 3
85570 Markt Schwaben (DE)**

(54) **EARPIECE**

(57) The present disclosure relates to an earphone comprising a first magnetic bead module, a second magnetic bead module, a first earphone module, and a second earphone module. The first magnetic bead module is disposed between the first earphone module and the second earphone module to at least partially block first radio electromagnetic radiation emitted outward via the wire. The second magnetic bead module is disposed between a communication unit and a first core unit to at least partially block second radio electromagnetic radiation emitted outward via a first ear hook line.

**FIG. 4**

**Description**

**TECHNICAL FIELD**

The present disclosure relates to the field of acoustic devices, and in particular, to an earphone.

**BACKGROUND**

An electronic device radiates electromagnetic waves outward during operation, inevitably causing electromagnetic pollution to the surrounding environment, including radiation damage to the human body or signal interference to other electronic devices.

As a common electronic device, an earphone is widely used in daily life, and the issue of radio electromagnetic radiation during its use has received increasing attention. Therefore, there is a need to provide an earphone in which the energy of the electromagnetic waves radiated outward is controlled within universal safety standards.

The contents in the BACKGROUND section are merely information known to the applicant, which does not mean that the above information has entered the public domain before the filing date of the present disclosure, nor does it mean that it can be regarded as prior art of the present disclosure.

**SUMMARY**

The present disclosure provides an earphone capable of effectively blocking external radiation of electromagnetic waves.

In a first aspect, the present disclosure provides an earphone, including a first earphone module, a second earphone module, and a first magnetic bead module. The first earphone module includes a data transmission unit. The data transmission unit transmits target data to an external environment via a wired transmission during operation. The second earphone module is electrically connected to the first earphone module via a wire. The first magnetic bead module is disposed between the first earphone module and the second earphone module to at least partially block first radio electromagnetic radiation emitted outward from the wire due to the wired transmission.

In some embodiments, a ratio of a wavelength of the first radio electromagnetic radiation to a length of the wire is in a range of 3.7 to 4.3.

In some embodiments, a frequency of the first radio electromagnetic radiation is in a range of 220 MHz to 260 MHz, and the length of the wire is in a range of 27 cm to 37 cm.

In some embodiments, the first magnetic bead module comprises at least one magnetic bead, and an impedance of the at least one magnetic bead reaches a peak value in a frequency range of 220 MHz to 800 MHz.

In some embodiments, the data transmission unit comprises: a data transmission interface; a storage, storing the target data; and a data input-output circuit, electrically connected to the data transmission interface and the storage. The wired transmission of the target data comprises: the data input-output circuit receiving the target data sent by the external environment via the data transmission interface in a wired manner, or transmitting the target data to the external environment via the data transmission interface in a wired manner.

In some embodiments, the earphone further includes a signal shield at least partially covering the data input-output circuit to at least partially block external radiation generated during the wired transmission of the target data.

In some embodiments, the first earphone module comprises a communication unit and a first core unit. The second earphone module comprises a power supply unit and a second core unit. The first magnetic bead module is connected to the communication unit to at least partially block at least a portion of the first radio electromagnetic radiation generated by the wire due to a clock signal generated by the communication unit.

In some embodiments, the second earphone module further comprises a power temperature detector and a key. The communication unit comprises at least one of: a power interface, a power temperature detection signal interface, a key signal interface, or a second speaker data interface. The first magnetic bead module comprises at least one of: a first magnetic bead unit, a second magnetic bead unit, a third magnetic bead unit, or a fourth magnetic bead unit. The first magnetic bead unit is connected to the power supply unit via the power interface. The second magnetic bead unit is connected to the power temperature detector via the power temperature detection signal interface. The third magnetic bead unit is connected to the key via the key signal interface. The fourth magnetic bead unit is connected to the second core unit via the second speaker data interface.

In some embodiments, the power interface comprises a positive electrode interface and a ground interface. The second speaker data interface comprises a second speaker data positive electrode interface and a second speaker data negative electrode interface. At least one magnetic bead in the first magnetic bead unit is connected to the positive electrode interface, at least one magnetic bead in the first magnetic bead unit is connected to the ground interface, at least one magnetic bead in the fourth magnetic bead unit is connected to the second speaker data positive electrode interface,

and at least one magnetic bead in the fourth magnetic bead unit is connected to the second speaker data negative electrode interface.

In some embodiments, the communication unit comprises a control element and an amplifier element electrically connected with each other. The control element is connected to at least one of the power interface, the power temperature detection signal interface, or the key signal interface via the first magnetic bead module. The amplifier element is connected to the second speaker data interface via the first magnetic bead module.

In some embodiments, the power supply unit comprises a battery. The communication unit and the first core unit are connected via a first ear hook line. The power supply unit and the second core unit are connected via a second ear hook line.

In some embodiments, the earphone further includes a second magnetic bead module, disposed between the communication unit and the first core unit to at least partially block second radio electromagnetic radiation emitted outward from the first ear hook line due to a harmonic signal of the clock signal. The first earphone module further includes at least one of a first microphone or a second microphone. The communication unit further includes at least one of: a first microphone interface, a second microphone interface, or a first speaker data interface. The second magnetic bead module includes at least one of a fifth magnetic bead unit, a sixth magnetic bead unit, or a seventh magnetic bead unit. The fifth magnetic bead unit is connected to the first microphone via the first microphone interface. The sixth magnetic bead unit is connected to the second microphone via the second microphone interface. The seventh magnetic bead unit is connected to the first core unit via the first speaker data interface.

In some embodiments, the first microphone interface includes a microphone positive electrode interface, a microphone ground interface, a first microphone data positive electrode interface, and a first microphone data negative electrode interface. The second microphone interface includes a second microphone data positive electrode interface and a second microphone data negative electrode interface. The first speaker data interface includes a first speaker data positive electrode interface and a first speaker data negative electrode interface. At least one magnetic bead in the fifth magnetic bead unit is connected to the microphone positive electrode interface. At least one magnetic bead in the fifth magnetic bead unit is connected to the microphone ground interface. At least one magnetic bead in the fifth magnetic bead unit is connected to the first microphone data positive electrode interface. At least one magnetic bead in the fifth magnetic bead unit is connected to the first microphone data negative electrode interface. At least one magnetic bead in the sixth magnetic bead unit is connected to the second microphone data positive electrode interface. At least one magnetic bead in the sixth magnetic bead unit is connected to the second microphone data negative electrode interface. At least one magnetic bead in the seventh magnetic bead unit is connected to the first speaker data positive electrode interface. At least one magnetic bead in the seventh magnetic bead unit is connected to the first speaker data negative electrode interface.

In some embodiments, the communication unit includes a control element and an amplifier element electrically connected with each other. The control element is connected to at least one of the first microphone interface or the second microphone interface through the second magnetic bead module. The amplifier element is connected to the first speaker data interface through the second magnetic bead module.

In some embodiments, the earphone further includes a connecting portion to connect the first earphone module and the second earphone module. The connecting portion comprises: an elastic bracket; the wire, extending along the elastic bracket; and an insulating layer, wrapping the elastic bracket and the wire.

It can be seen from the above technical solutions that, the earphone provided in the present disclosure includes the first magnetic bead module disposed between the first earphone module and the second earphone module, the first magnetic bead module having at least a partial blocking effect on signals in a specific frequency band. When the target data is transmitted in the first earphone module, the first radio electromagnetic radiation generated during the transmission of the target data falls within the frequency band range. The first magnetic bead module can at least partially block the first radio electromagnetic radiation from propagating outward via the wire connecting the two earphone modules. Furthermore, the earphone provided in the present disclosure includes the second magnetic bead module disposed between the communication unit and the first core unit of the first earphone module, the second magnetic bead module having a blocking effect on signals in a specific frequency band to at least partially block the second radio electromagnetic radiation, preventing the second radio electromagnetic radiation from propagating outward via the first ear hook line connecting the communication unit and the first core unit.

Other functions of the earphone provided in the present disclosure will be partially listed in the following description. The contents of the numbers and examples described below will be apparent to those skilled in the art. Creative aspects of the earphones provided in the present disclosure may be fully explained by practicing or using the methods, apparatuses, and combinations provided in the detailed examples below.

## BRIEF DESCRIPTION OF THE DRAWINGS

To more clearly illustrate the technical solutions in the embodiments of the present disclosure, the drawings used in the description of the embodiments will be briefly introduced below. Obviously, the drawings in the following description are only some embodiments of the present disclosure. For those skilled in the art, other drawings may be obtained based on these drawings without creative effort.

FIG. 1 is a schematic diagram illustrating an exemplary structure of an earphone according to some embodiments of the present disclosure.

FIG. 2 is a schematic diagram illustrating an exemplary exploded view of a connecting portion of an earphone according to some embodiments of the present disclosure.

FIG. 3 is a schematic diagram illustrating exemplary modules of an earphone according to some embodiments of the present disclosure.

FIG. 4 is a schematic diagram illustrating exemplary modules of an earphone according to some embodiments of the present disclosure.

FIG. 5 is a schematic diagram illustrating an exemplary impedance-frequency curve of a magnetic bead according to some embodiments of the present disclosure.

FIG. 6 is a schematic diagram illustrating an exemplary connection manner of a first magnetic bead module according to some embodiments of the present disclosure.

FIG. 7 is a schematic diagram illustrating an exemplary connection manner of a second magnetic bead module according to some embodiments of the present disclosure.

FIG. 8 is a schematic diagram illustrating an exemplary comparative test of an earphone according to some embodiments of the present disclosure.

## DETAILED DESCRIPTION

The following description provides specific application scenarios and requirements of the present disclosure, with the purpose of enabling those skilled in the art to make and use the content of the present disclosure. For those skilled in the art, various local modifications to the disclosed embodiments are obvious, and the general principles defined herein may be applied to other embodiments and applications without departing from the spirit and scope of the present disclosure. Therefore, the present disclosure is not limited to the illustrated embodiments, but to the broadest scope consistent with the claims.

The terminology used herein is for the purpose of describing particular example embodiments only and is not limiting. For example, unless the context clearly indicates otherwise, the singular forms "a," "an," and "the" as used herein may also include the plural forms. As used in the present disclosure, the terms "include," "comprise," and/or "contain" mean that the associated integer, step, operation, element, and/or component is present, but do not exclude the presence or addition of one or more other features, integers, steps, operations, elements, components, and/or groups in the system/method.

In view of the following description, these and other features of the present disclosure, the operation and function of related elements of the structure, and the combination of components and the economy of manufacture can be significantly improved. Reference is made to the accompanying drawings, all of which form a part of the present disclosure. However, it should be clearly understood that the drawings are for the purpose of illustration and description only, and are not intended to limit the scope of the present disclosure. It should also be understood that the drawings are not drawn to scale.

The flowcharts used in the present disclosure illustrate the operations of system implementations according to some embodiments of the present disclosure. It should be clearly understood that the operations of the flowchart may be implemented out of order. Conversely, the operations may be implemented in reverse order or simultaneously. Furthermore, one or more other operations may be added to the flowchart. One or more operations may be removed from the flowchart.

In the present disclosure, the expression "X includes at least one of A, B, or C" means that X includes at least A, or X includes at least B, or X includes at least C. That is, X may include only any one of A, B, C, or simultaneously include any combination of A, B, C, and other possible content/elements. Any combination of A, B, C may be A, B, C, AB, AC, BC, or ABC.

In the present disclosure, unless explicitly stated, the association relationship between structures may be a direct association relationship or an indirect association relationship. For example, when describing "A is connected to B", unless it is explicitly stated that A is directly connected to B, it should be understood that A may be directly connected to B or indirectly connected to B. As another example, when describing "A is above B", unless it is explicitly stated that A is directly above B (A and B are adjacent and A is above B), it should be understood that A may be directly above B, or A may be indirectly above B (other elements are between A and B, and A is above B).

For ease of understanding, before describing some embodiments provided by the present disclosure, the relevant background is introduced as follows:

When an electronic device operates, a changing electric field in wires and components forms a changing magnetic field around them, and the changing magnetic field may in turn excite a changing electric field. The changing magnetic field and the changing electric field interact and excite each other, thereby radiating electromagnetic waves outward. The electromagnetic waves may be transmitted through tangible conductors, that is, conducted propagation. The electromagnetic waves may also be transmitted through space, that is, electromagnetic radiation. The transmission distances of the electromagnetic waves in space vary with the frequencies of the electromagnetic waves. Theoretically, the higher a frequency of an electromagnetic wave is, the more electromagnetic energy it contains, and the farther it transmits. Alternatively, the higher the frequency of the electromagnetic wave, the higher an average power density or an electromagnetic field intensity at the same distance may be.

When the electronic device radiates electromagnetic waves outward, if there is an electromagnetic wave of a specific wavelength that has a certain proportional relationship with the size of the wires or components of the circuit system, the radiation range of the electromagnetic wave will be further expanded. For example, when a length of a wire is one-half or one-quarter of a wavelength of an electromagnetic wave, the wire is equivalent to an antenna, transmitting the electromagnetic wave to a wider range. The electromagnetic radiation may cause problems such as crosstalk in electronic systems and electromagnetic compatibility, and some may cause harm to the human body or the environment. Therefore, in the circuit design process of electronic devices, especially in the design of high-speed circuits, it is necessary to consider the electromagnetic radiation that may be generated and suppress the outward propagation of electromagnetic radiation as much as possible.

Next, the earphones provided by the present disclosure will be described in detail.

The earphones provided by the present disclosure may be any type of earphone. For example, the earphone may be a wired earphone. A receiver in the wired earphone may receive an electrical signal from a media player through a wired transmission, thereby converting the electrical signal into a sound wave that can be heard by the human ear. For example, the earphone may be a wireless earphone. A receiver in the wireless earphone may receive the electrical signal from the media player through a wireless transmission, thereby converting the electrical signal into a sound wave that can be heard by the human ear. As another example, the earphone may be an air conduction earphone. The air conduction earphone may convert the electrical signal into an air vibration signal. The air vibration signal may be transmitted to the ear canal of the ear. The eardrum in the ear may convert the air vibration signal into sound. As still another example, the earphone may be a bone conduction earphone. The bone conduction earphone may convert the electrical signal into a mechanical vibration signal. The mechanical vibration signal may cause vibration of the skull, cause the perilymph to produce fluctuations of the same frequency, and stimulate the spiral organ of the cochlea to produce hearing. As still another example, the earphone may be a combination of the air conduction earphone and the bone conduction earphone. The present disclosure does not limit the type of earphones.

For wired earphones and wireless earphones, "wired" and "wireless" refer to that a data transmission manner between the earphone and the media player is wired or wireless when a music is played. The wired earphone needs to perform real-time transmission and playback of audio data through the connection wire. The wireless earphone connects to the media player and wirelessly transmit audio data through wireless signals, such as Bluetooth. In addition to music playback scenarios, users may sometimes need to import target data, such as audio data, into a storage built into the earphone via a transmission wire for storage. The wired transmission here is independent of whether the earphone is the aforementioned wired earphone or the wireless earphone. That is, both wired earphones and wireless earphones may be configured with wired data transmission and storage functions.

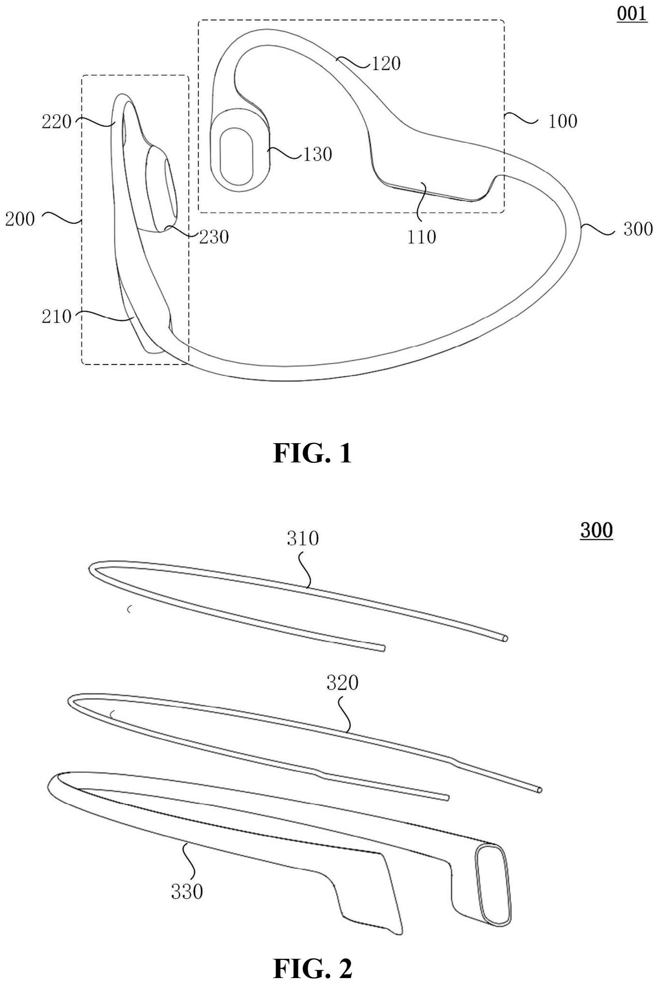

The earphones provided in the present disclosure can implement transmission and storage of target data. FIG. 1 is a schematic diagram illustrating an exemplary structure of an earphone 001 according to some embodiments of the present disclosure. The earphone 001 may include a first earphone module 100, a second earphone module 200, and a connecting portion 300 connecting the first earphone module 100 and the second earphone module 200.

The first earphone module 100 and the second earphone module 200 each includes at least one core unit 130, 230, configured to convert electrical signals into sound waves audible to humans. In addition, the first earphone module 100 and the second earphone module 200 each further includes other auxiliary devices 110, 210, such as a main control board module or a battery module, etc. The first core unit 130 and its auxiliary device 110 may be disposed at different positions of the earphone 001, or may be integrated together in one housing. Similarly, the second core unit 230 and its auxiliary device 210 may be disposed at different positions of the earphone 001, or may be integrated together in one housing. FIG. 1 shows a scenario where the first core unit 130, the second core unit 230, and their auxiliary devices 110, 210 are disposed at different positions of the earphone 001. In this situation, the first core unit 130, the second core unit 230, and their auxiliary devices 110, 210 are connected by a first ear hook line 120 and a second ear hook line 220, respectively.

The first earphone module 100 or the second earphone module 200 may include a data transmission unit capable of performing wired transmission and storage of target data. For example, the earphone 001 may include a function of playing MP3 audio, and include an MP3 player in the first earphone module 100 or the second earphone module 200. The MP3 player includes a storage for MP3 data and a data interface, such as a USB interface, for wired transmission of MP3 files from a third-party data source. Certainly, the earphone 001 may further include other functions, and their corresponding modules may be classified as the data transmission units for performing wired transmission and storage of target data, which is not limited to the present disclosure.

In the present disclosure, the data transmission unit is located in the first earphone module 100 as an example for description.

It should be noted that, although in the earphone 001 shown in FIG. 1, the first earphone module 100 is worn on the right ear and the second earphone module 200 is worn on the left ear, it should be understood that the relative positions of the first earphone module 100 and the second earphone module 200 are not limited by the wearing style. That is, in some embodiments, the module used to be worn on the left ear may be the first earphone module 100, and the module to be worn on the right ear may be the second earphone module 200.

As shown in FIG. 1, the connecting portion 300 is configured to connect the first earphone module 100 and the second earphone module 200. FIG. 2 is a schematic diagram illustrating an exemplary exploded view of a connecting portion of the earphone 001 according to some embodiments of the present disclosure. The connecting portion 300 may include an elastic bracket 320, a wire 310, and an insulating layer 330.

An arc-shaped design may be adopted for the elastic bracket 320 to provide a certain clamping force when a user wears the earphone. For example, when a user wears the earphone, the first earphone module and the second earphone module may be respectively hung on the outer sides of the user's ears, and the connecting portion is wound around the back of the user's head. The clamping force provided by the elastic bracket 320 allows the first earphone module and the second earphone module to fit snugly against the user's skin, thereby improving wearing reliability. In some embodiments, the elastic bracket 320 may be an elastic metal wire. In some embodiments, the elastic bracket 320 may be an elastic plastic bracket. In some embodiments, the elastic bracket may be an elastic polymer material bracket. The present disclosure does not limit the material of the elastic bracket 320.

The wire 310 may extend along the elastic bracket 320, and two ends of the elastic bracket 320 are respectively connected to the first earphone module 100 and the second earphone module 200. The wire 310 may be configured to achieve an electrical connection between electronic components of the first earphone module and the second earphone module. The wire 310 may be set as one strand or a plurality of strands according to circuit connection requirements. For example, the wire 310 may be set to 1 strand, 2 strands, 3 strands, 5 strands, 6 strands, 8 strands, or any number of strands. A length of the wire 310 is determined according to the actual earphone product design needs for appearance or function. For example, the earphone should have good wearing stability or wearing comfort. For example, in some earphones, the length of the wire 310 is in a range of 27 cm (centimeters) to 37 cm. In some embodiments, the earphone 001 is a head-mounted earphone, and the length of the wire 310 may be determined according to the length of the connecting portion wound around the top of a general user's head when worn. In some embodiments, the earphone 001 is a rear-hook earphone, and the length of the wire 310 may be determined according to the length of the connecting portion wound around the back of a general user's head when worn. The general user may be a user who provides usage experience or data for product design or testing. The general user may be a real person or a virtual character.

The insulating layer 330 may wrap the elastic bracket 320 and the wire 310. The insulating layer 330 may achieve encapsulation of the elastic bracket 320 and the wire 310, meeting product requirements such as leakage prevention and waterproofing. The insulating layer 330 may be integrally formed or may be formed by splicing a plurality of insulating layers. The insulating layer 330 may be made of a soft material with a certain elasticity, such as soft silicone and rubber.

As mentioned above, the earphone 001 provided in the present disclosure includes a data interface, which may be connected to a data line and import target data from an external device into the storage in the earphone 001 via the data line. With the development of interface technology, the speed of data transmission continues to increase, which means that when the earphone 001 performs high-speed data transmission, a high-frequency clock signal will exist in the earphone 001. In different technical fields, the definition of high frequency varies. In the definition of high-speed circuit, when the clock frequency in an electronic system reaches or exceeds 50 MHz, the circuit system is a high-speed circuit, and the clock frequency may be considered high frequency. The high frequency mentioned in the present disclosure may refer to this definition. High-frequency signals may cause many problems for the circuit system. For example, electromagnetic radiation generated by the high-frequency signals may cause crosstalk within the circuit system, leading to timing errors or affecting the sensitivity of components. Sometimes, the electromagnetic radiation generated by the high-frequency signals radiates outward, causing electromagnetic interference to other electronic devices. For example, electromagnetic waves radiated by the high-frequency signals include harmonic components with higher frequencies. These higher-frequency harmonic components are more likely to be emitted outward through wires or interfaces.

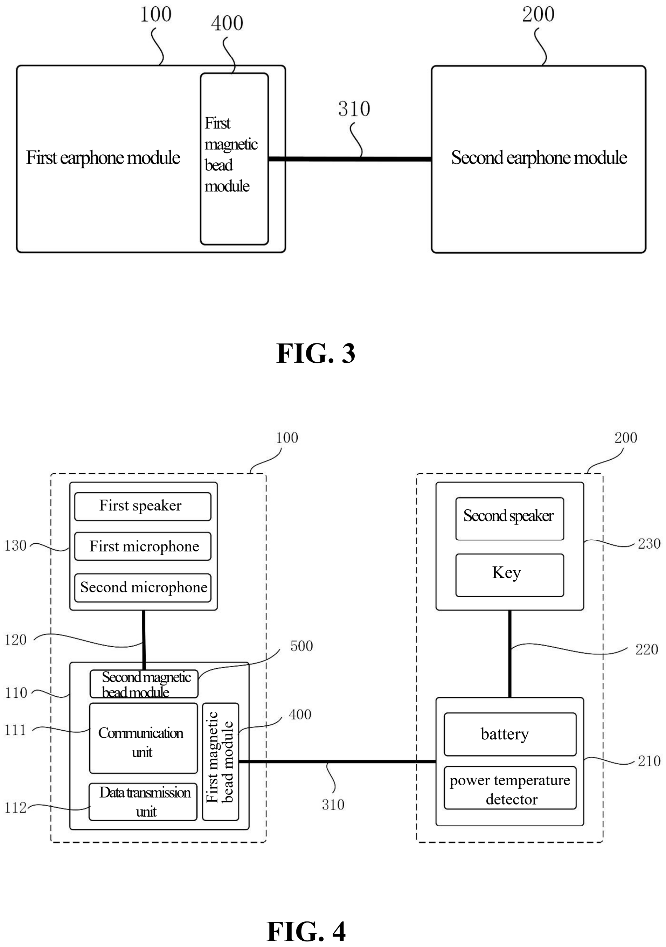

Accordingly, the earphone 001 provided in the present disclosure includes a high-frequency suppression device in a circuit to suppress the electromagnetic waves generated by the high-frequency signals from propagating outward through wires or interfaces. FIG. 3 is a schematic diagram illustrating exemplary modules of the earphone 001 according to some embodiments of the present disclosure. The earphone 001 provided in the present disclosure includes a first magnetic bead module 400 between the first earphone module 100 and the second earphone module 200. The first magnetic bead module 400 has an attenuation effect on electromagnetic waves in a specific frequency band. When target data is transmitted in the first earphone module 100, first radio electromagnetic radiation generated during transmission of the target data falls within a specific frequency band. The first magnetic bead module 400 may suppress the first radio electromagnetic radiation, so that electromagnetic energy of the first radio electromagnetic radiation is reduced after passing through the first magnetic bead module 400, thereby suppressing the first radio electromagnetic radiation from propagating outward through the wire 310.

The module structure of the earphone 001 provided in the present disclosure is described in detail below with reference to FIG. 4.

FIG. 4 is a schematic diagram illustrating exemplary modules of the earphone 001 according to some embodiments of the present disclosure. The first earphone module 100 may include a communication unit 111. In some embodiments, the communication unit 111 may receive and transmit wireless signals. For example, the communication unit 111 may communicate with an external media player or a host device in at least one of Bluetooth, NFC, or Wifi. In some embodiments, the communication unit 111 may communicate with the host device in a wired manner. In some embodiments, the communication unit 111 may perform audio data decoding or digital-to-analog conversion. In some embodiments, the communication unit 111 may receive and play audio data sent by an external media player through a Bluetooth antenna, that is, play music through a Bluetooth connection.

In some embodiments, the communication unit 111 may include a control element. The communication unit 111 may include an amplifier element. The control element and the amplifier element are electrically connected. The control element may be a microprocessor. The microprocessor may send a control signal to an external device. In some embodiments, the microprocessor may synchronize a clock signal with the external device. The external device may include an I/O device (e.g., a storage device) electrically connected to the microprocessor. The microprocessor may read and process data in the storage device. The amplifier element is configured to amplify a power of a received sound electrical signal so that a sound can be heard by a person. The control element may send a control signal to the amplifier element. The control element may also send the sound electrical signal to the amplifier element.

As shown in FIG. 4, the first earphone module 100 may include a first core unit 130. The first core unit 130 and the communication unit 111 are connected by a first ear hook line 120. The first core unit 130 may include a first speaker. The first speaker may convert the electrical signal into a sound wave that can be heard by a person. The first ear hook line 120 may include a first speaker data line connecting the amplifier element and the first core unit 130. After the sound electrical signal is amplified by the amplifier element, the sound electrical signal is transmitted to the first speaker along the first speaker data line. The first speaker data line may include a first speaker data positive electrode line and a first speaker data negative electrode line.

As shown in FIG. 4, the first core unit 130 may include a first microphone. The first microphone and the communication unit 111 are connected by the first ear hook line 120. In some embodiments, the first microphone is a primary microphone. The primary microphone may be configured to pick up a speech sound during a call and collect an ambient sound signal. The first ear hook line 120 may include a first microphone data line connecting the control element and the first microphone. The first microphone data line may include a first microphone data positive electrode line and a first microphone data negative electrode line. The first ear hook line 120 may include a microphone power line for supplying power to the first microphone. The microphone power line includes a microphone positive electrode line and a microphone ground line. The first core unit 130 may further include a second microphone. The second microphone and the communication unit 111 are connected by the first ear hook line 120. In some embodiments, the second microphone is a secondary microphone. The secondary microphone may be configured to collect the ambient sound signal. The secondary microphone and the primary microphone form a feedforward-feedback structure to perform noise reduction on the ambient sound. The first ear hook line may include a second microphone data line connecting the control element and the second microphone. The second microphone data line may include a second microphone data positive electrode line and a second microphone data negative electrode line.

As shown in FIG. 4, the auxiliary device 110 of the first earphone module 100 may be a module for placing a main control circuit of the earphone 001. For example, the auxiliary device 110 includes a main board of the earphone. FIG. 4 shows that the auxiliary device 110 may include a data transmission unit 112, the communication unit 111, the first magnetic bead module 400, and a second magnetic bead module 500.

The data transmission unit 112 transmits the target data to an external environment via a wired transmission during operation. The target data may be audio data. The data transmission unit 112 is electrically connected to the communication unit 111. The data transmission unit 112 may receive the control signal sent by the communication unit 111. In some embodiments, the control signal may be a switch signal for controlling the data transmission unit 112 to start data transmission. In some embodiments, the control signal may be a clock signal for signal synchronization between the communication unit 111 and the data transmission unit 112. The data transmission unit 112 may send a data signal to the communication unit 111. In some embodiments, the data signal may be a 1-bit data signal. The data transmission unit 112 may include a data transmission interface, a storage, and a data input-output circuit. The wired transmission of the target data may include the data input-output circuit receiving the target data sent by the external environment via the data transmission interface in a wired manner or transmitting the target data to the external environment via the data transmission interface in a wired manner.

To perform the wired transmission of the target data, the data transmission unit 112 may include the data transmission interface. The data transmission interface provides a standard interface for a wired connection with an external device. The external device may exchange the target data with the data transmission interface through a connection wire or a connector. In some embodiments, the data transmission interface may be a Universal Serial Bus (USB) interface. In some embodiments, the USB interface may be a micro USB interface. In some embodiments, the USB interface may be a type-C interface. In some embodiments, the USB interface may be a USB 2.0 interface. A data transmission rate of the USB 2.0 interface may be 480 Mbps (bps, bits per second). Since USB 2.0 adopts non-return-to-zero inverted encoding, 2-bit data is transmitted in each clock cycle, that is, when the data transmission rate is 480 Mbps, a corresponding clock frequency is 240 MHz (Hz, Hertz, a frequency unit). In some embodiments, the control element of the communication unit may provide a clock signal of 240 MHz.

To store target data received from a third-party data source, the data transmission unit 112 may further include the storage. The storage may store the target data. The earphone provided in the present disclosure may play the target audio data stored in the built-in storage when no signal transmission is performed with an external media player. In some embodiments, the storage may be eMMC, SSD, UFS, etc.

The data transmission unit 112 may further include the data input-output circuit. The data input-output circuit is electrically connected to the data transmission interface and the storage, and is configured to input the target data from the data transmission interface to the storage, or output the target data from the storage to the data transmission interface. The data transmission unit 112 is electrically connected to the communication unit 111 to receive the control signal from the communication unit 111. The control signal may include an enable signal and may also include the clock signal. In some embodiments, a frequency of the clock signal is 240 MHz, and the data input-output circuit performs data transmission at a rate of transmitting 2-bit data per clock cycle. In some embodiments, the clock signal of 240 MHz may be obtained by performing a frequency multiplication on a basic clock signal of the communication unit, and a frequency of the basic clock signal of the communication unit may be 24 MHz, 48 MHz, etc. Since the data input-output circuit maintains high-speed data signal changes during data transmission, it also radiates electromagnetic waves outward through a surface of an element or the interface. Therefore, in some embodiments, the earphone further includes a signal shield. The signal shield at least partially covers the data input-output circuit to at least partially block outward radiation generated during the wired transmission of the target data.

For the earphone 001 provided in the present disclosure, when the data transmission unit 112 performs the wired transmission of the target data through the data transmission interface, the data transmission unit may receive the clock signal sent by the communication unit 111 for data synchronization. A high-frequency clock signal matching a standard of the data transmission interface may be generated in the communication unit 111. During wired data transmission through the data transmission unit 112, at least circuits of the communication unit 111 and the data transmission unit 112 in the entire circuit system have high-frequency signals. The high-frequency signals may include the clock signal for data synchronization, and may include target data signal transmitted at a high speed, wherein the signal with the highest energy is the synchronization clock signal. In some embodiments, when the earphone 001 uses the data transmission interface of USB 2.0 for high-speed data transmission, the frequency of the clock signal is 240 MHz. The clock signal may radiate electromagnetic waves outward through a wire, a wiring on a printed circuit board, or a solder joint, and energy of the electromagnetic waves is mainly concentrated at 240 MHz.

As described above, the length of the wire 310 of the earphone 001 provided in the present disclosure is 27 cm to 37 cm. When the wired transmission of the target data occurs, at least a part of the first radio electromagnetic radiation in the circuit may enter the wire 310 through a connection portion between the wire 210 and the communication unit 111. A frequency of the first radio electromagnetic radiation is in a range of 220 MHz to 260 MHz. According to a wavelength calculation formula (1):

$$\lambda = \frac{c}{f} \qquad\qquad (1)$$

In the formula (1), A represents a wavelength, c represents the speed of light, and f represents a wave frequency. A wavelength corresponding to the first radio electromagnetic radiation is in a range of 1.15 m to 1.36 m. A ratio of the wavelength of the first radio electromagnetic radiation to the length of the wire is in a range of 3.7 to 4.3. According to an antenna principle, when the ratio of the wavelength of the first radio electromagnetic radiation to the length of the wire 310 is approximately 4, the wire 310 just becomes an equivalent antenna, which may propagate the first radio electromagnetic radiation to a farther space range, thereby causing electromagnetic interference in a larger range. A center frequency of the first radio electromagnetic radiation is approximately 240 MHz, and a wavelength corresponding to the center frequency is 1.25 m. When the length of the wire 310 is 31.25 cm, a propagation effect on the first radio electromagnetic radiation is relatively obvious.

Therefore, the present disclosure provides the earphone 001, which attenuates the first radio electromagnetic radiation before the first radio electromagnetic radiation is emitted outward through the wire 310, so as to reduce the emission energy of the first radio electromagnetic radiation by the wire 310 as the equivalent antenna. As shown in FIG. 4, the earphone 001 includes the first magnetic bead module 400. The first magnetic bead module 400 is disposed between the first earphone module 100 and the second earphone module 200 to at least partially block the first radio electromagnetic radiation emitted outward from the wire due to the wired transmission of the target data.

For the convenience of subsequent description, before the first magnetic bead module 400 is described in detail, the second earphone module 200 is first further described.

As shown in FIG. 4, the second earphone module 200 may include a power supply unit 210. The power supply unit 210 may provide power to an active device in the earphone 001. At least a power line is connected between the power supply unit 210 and the communication unit 111. The power line includes a positive electrode line and a ground line. The wire 310 may include the power line. The power supply unit 210 may include a battery. In some embodiments, the battery may be a rechargeable battery. The rechargeable battery may be charged through a charging interface, and may supply power outward through a connected power line.

The power supply unit 210 may include a power temperature detector. The power temperature detector is electrically connected to the communication unit 111 to transmit a temperature signal of the power supply unit to the communication unit 111. At least a power temperature detection signal line is connected between the power temperature detector and the communication unit 111. The wire 310 may include a power temperature detection signal line. The power temperature detector detects a temperature condition of the power supply by a temperature sensor exhibiting different element characteristics at different temperatures. In some embodiments, the temperature sensor may be a thermistor. In some embodiments, the second core unit 230 and the power supply unit are connected through the second ear hook line 220.

As shown in FIG. 4, the second earphone module 200 may include the second core unit 230. The second core unit 230 may include a second speaker. The second speaker may convert an electrical signal into a sound wave that can be heard by a person.

The wire 310 may include a second speaker data line. The amplifier element and the second core unit 230 are connected through the second speaker data line. After power amplification is performed by the amplifier element, the sound electrical signal is transmitted to the second core unit 230 along the second speaker data line. The second speaker data line may include a second speaker data positive electrode line and a second speaker data negative electrode line. The second ear hook line 220 may include a second speaker data line. The second speaker data line may be connected through an adapter located in the second earphone module. The second speaker data line may include a second speaker data positive electrode line and a second speaker data negative electrode line.

The second earphone module 200 may further include at least one key. The at least one key may be operated by the user to control the earphone to implement key functions such as turning on, turning off, volume adjustment, or mode switching. The at least one key may receive a user operation and convert the user operation into a key electrical signal. The key electrical signal may be transmitted to the communication unit through a key signal line to implement a key function. The wire may include a key signal line connected between the at least one key and the communication unit. The key signal line may be one or more lines.

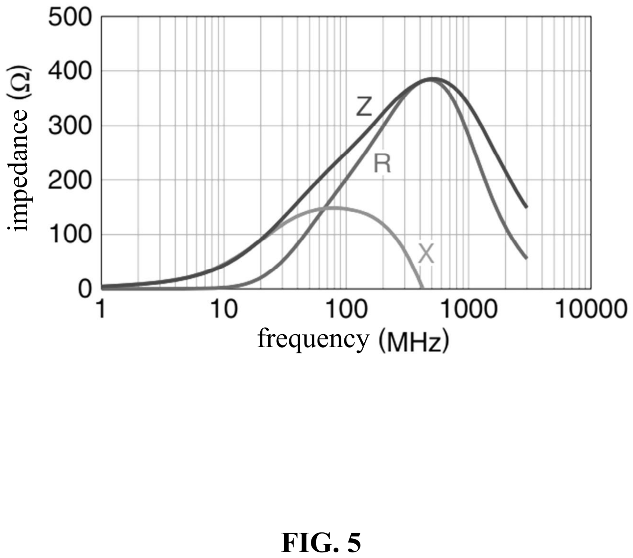

As described above, the earphone 001 provided in the present disclosure includes the first magnetic bead module 400 between the first earphone module 100 and the second earphone module 200 to completely or partially suppress the first radio electromagnetic radiation. The first magnetic bead module includes at least one magnetic bead. The at least one magnetic bead should have a good suppression effect on the first radio electromagnetic radiation. FIG. 5 is a schematic diagram illustrating an exemplary impedance-frequency curve of a magnetic bead according to some embodiments of the present disclosure. A horizontal coordinate of the curve is frequency. A vertical coordinate of the curve is an impedance value. $Z = R + jX$, where $Z$ is a modulus of the impedance, $R$ is a real part (i.e., a resistance) of the impedance, and $X$ is an imaginary part (i.e., a reactance) of the impedance. At a low frequency, the impedance value of the magnetic bead is small. As the frequency increases, the magnetic bead gradually exhibits resistance. At an impedance peak point, the magnetic bead exhibits complete resistance characteristics. The impedance of the at least one magnetic bead reaches a peak in a frequency range of 220 MHz to 800 MHz. Since the magnetic bead has a suppression effect on high-frequency signals in a specific frequency band and has a small impact on low-frequency signals, the characteristic of the magnetic bead may be used to attenuate the first radio electromagnetic radiation without affecting transmission of an audio signal. In some embodiments, the magnetic bead may be a ferrite bead. In some embodiments, the magnetic bead may be a ring-shaped magnetic bead or a chip magnetic bead. The ring-shaped magnetic bead may be sleeved on a wire. The chip magnetic bead may be welded to a circuit board.

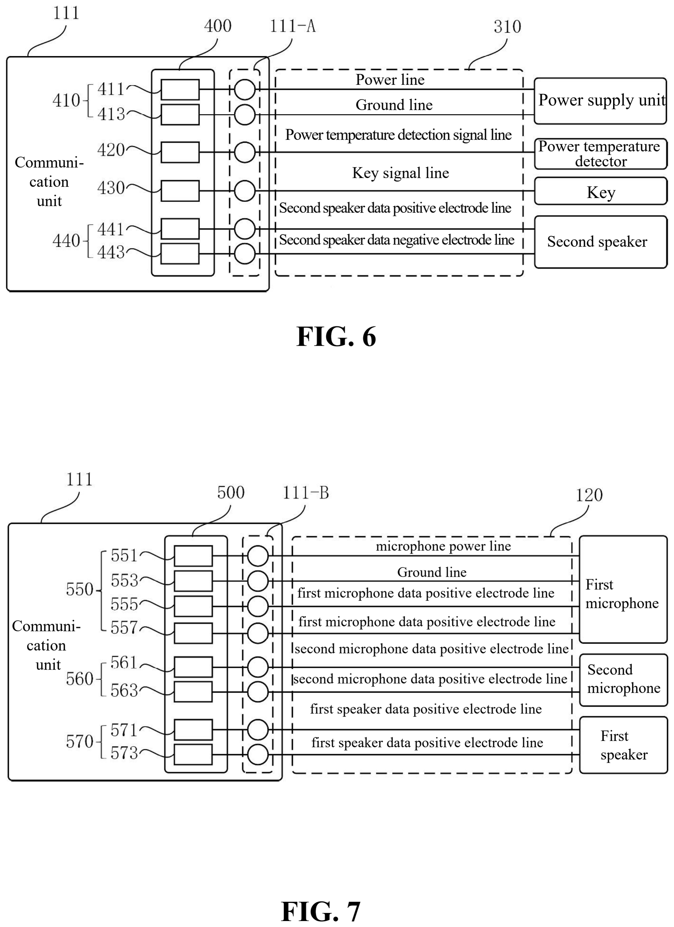

FIG. 6 is a schematic diagram illustrating an exemplary connection manner of a first magnetic bead module 400 according to some embodiments of the present disclosure. The communication unit 111 of the first earphone module 100 may be connected to the wire 310 through a series of interfaces 111-A, thereby implementing an electrical connection between the first earphone module 100 and the second earphone module 200. The first magnetic bead module 400 is connected to the communication unit 111. The first magnetic bead module 400 includes at least one of a first magnetic bead unit 410, a second magnetic bead unit 420, a third magnetic bead unit 430, or a fourth magnetic bead unit 440.

The communication unit 111 may include a power interface. The power interface includes a positive electrode interface and a ground interface. The positive electrode interface is connected to a positive electrode line. The ground interface is connected to a ground line. The first magnetic bead unit 410 is connected to the power supply unit via the power interface. At least one magnetic bead 411 in the first magnetic bead unit 410 is connected to the positive electrode interface. At least one magnetic bead 413 in the first magnetic bead unit 410 is connected to the ground interface. The first magnetic bead unit 410 may prevent the first radio electromagnetic radiation from entering the wire 310 through the power interface.

The communication unit 111 may include a power temperature detection signal interface. The power temperature detection signal interface is connected to a power temperature detection signal line to achieve a signal connection between the communication unit 111 and the power temperature detector. The second magnetic bead unit 420 is connected to the power temperature detector via the power temperature detection signal interface to prevent the first radio electromagnetic radiation from entering the wire 310 through the power temperature detection signal interface.

The communication unit 111 may include a key signal interface. The key signal interface is connected to a key signal line to achieve a signal connection between the communication unit 111 and the key. The third magnetic bead unit 430 is connected to the key through the key signal interface to prevent the first radio electromagnetic radiation from entering the wire 310 through the key signal interface.

The communication unit 111 may include a second speaker data interface. The second speaker data interface may include a second speaker data positive electrode interface and a second speaker data negative electrode interface. The second speaker data positive electrode interface is connected to a second speaker data positive electrode line. The second speaker data negative electrode interface is connected to a second speaker data negative electrode line to achieve a signal connection between the communication unit 111 and the second core unit 230. The fourth magnetic bead unit 440 is connected to the second core unit 230 via the second speaker data interface. At least one magnetic bead 441 in the fourth magnetic bead unit 440 is connected to the second speaker data positive electrode interface. At least one magnetic bead 443 in the fourth magnetic bead unit is connected to the second speaker data negative electrode interface to prevent the first radio electromagnetic radiation from entering the wire 310 through the second speaker data interface.

As described above, the communication unit 111 may include a control element and an amplifier element. The control element is connected to at least one of the power interface, the power temperature detection signal interface, or the key signal interface through the first magnetic bead module 400. The amplifier element is connected to the second speaker data interface through the first magnetic bead module 400.

In summary, the earphone 001 provided by the present disclosure can exchange the target data with the outside through a wired transmission. During the wired transmission, the communication unit 111 generates a high-frequency clock signal. The high-frequency clock signal and the high-speed target data signal form high-frequency electromagnetic radiation that propagates in the circuit. Furthermore, the length of the wire 310 of the earphone 001 is approximately 1/4 of the wavelength of the clock signal, which can constitute an equivalent antenna to propagate the first radio electromagnetic radiation outward. Therefore, the earphone 001 provided by the present disclosure includes the first magnetic bead module 400 disposed between the first earphone module 100 and the second earphone module 200, to at least partially block at least a portion of the first radio electromagnetic radiation generated by the wire 310 due to the clock signal generated by the communication unit 111.

Furthermore, the frequency of the electromagnetic radiation caused by the high-frequency clock signal includes not only the clock frequency but also rich harmonic components. The frequency of the harmonic is an integer multiple of the clock frequency. This means that a second radio electromagnetic radiation with a higher frequency also exists in the circuit. For the second radio electromagnetic radiation, the first ear hook line 120, which is shorter than the wire 310, becomes a possible 1/4 wavelength equivalent antenna of the second radio electromagnetic radiation. If the second radio electromagnetic radiation is not suppressed before it enters the first ear hook line 120, the second radio electromagnetic radiation may be emitted outward using the first ear hook line 120 as an antenna.

Accordingly, the earphone 001 provided by the present disclosure further includes a second magnetic bead module 500. The second magnetic bead module 500 is disposed between the communication unit 111 and the first core unit 130, to at least partially block the second radio electromagnetic radiation emitted outward from the first ear hook line 120 due to the clock signal and/or the harmonic signal of the clock signal. The second magnetic bead module includes at least one magnetic bead. An impedance of the at least one magnetic bead reaches a peak in a frequency range of 220 MHz to 800 MHz. For a clock signal with a frequency of 240 MHz, its harmonic component with the highest energy is 720 MHz. The magnetic bead of the second magnetic bead unit has a good suppression effect on the second radio electromagnetic radiation of 720 MHz.

FIG. 7 is a schematic diagram illustrating an exemplary connection manner of a second magnetic bead module 500 according to some embodiments of the present disclosure. The communication unit 111 of the first earphone module 100 may be connected to other components of the first earphone module 100 through a series of interfaces 111-B, thereby realizing electrical connections among the components within the first earphone module 100. The second magnetic bead module 500 includes at least one of a fifth magnetic bead unit 550, a sixth magnetic bead unit 560, or a seventh magnetic bead unit 570.

The communication unit 111 may further include a first microphone interface. The first microphone interface includes a microphone positive electrode interface, a microphone ground interface, a first microphone data positive electrode interface, and a first microphone data negative electrode interface. The microphone positive electrode interface is connected to a microphone positive electrode line. The microphone ground interface is connected to a microphone negative electrode line. The first microphone data positive electrode interface is connected to a first microphone data positive electrode line. The first microphone data negative electrode interface is connected to a first microphone data negative electrode line, for connecting the power supply and signals between the first microphone and the communication unit 111. The fifth magnetic bead unit 550 is connected to the first microphone via the first microphone interface. In the fifth magnetic bead unit 550, at least a magnetic bead 551 is connected to the microphone positive electrode interface, a magnetic bead 553 is connected to the microphone ground interface, a magnetic bead 555 is connected to the first microphone data positive electrode interface, and a magnetic bead 557 is connected to the first microphone data negative electrode interface, to block or partially hinder the second radio electromagnetic radiation from entering the first ear hook line 120 through the first microphone interface.

The communication unit 111 may further include a second microphone interface. The second microphone interface includes a second microphone data positive electrode interface and a second microphone data negative electrode interface. The second microphone data positive electrode interface is connected to a second microphone data positive electrode line. The second microphone data negative electrode interface is connected to a second microphone data negative electrode line, for connecting signals between the second microphone and the communication unit. The sixth magnetic bead unit 560 is connected to the second microphone through the second microphone interface. At least one magnetic bead 561 in the sixth magnetic bead unit 560 is connected to the second microphone data positive electrode interface. At least one magnetic bead 563 in the sixth magnetic bead unit 560 is connected to the second microphone data negative electrode interface, to hinder the second radio electromagnetic radiation from entering the first ear hook line 120 through the second microphone interface.

The communication unit 111 may further include a first speaker data interface. The first speaker data interface includes a first speaker data positive electrode interface and a first speaker data negative electrode interface. The first speaker data positive electrode interface is connected to a first speaker data positive electrode line. The first speaker data negative electrode interface is connected to a first speaker data negative electrode line. The seventh magnetic bead unit 570 is connected to the first core unit 130 via the first speaker data interface. At least one magnetic bead 571 in the seventh magnetic bead unit 570 is connected to the first speaker data positive electrode interface. At least one magnetic bead 573 in the seventh magnetic bead unit 570 is connected to the first speaker data negative electrode interface, to hinder the second radio electromagnetic radiation from entering the first ear hook line 120 through the first speaker data interface.

As mentioned above, the communication unit 111 may include the control element and the amplifier element. The control element is connected to at least one of the first microphone interface or the second microphone interface through the second magnetic bead module 500. The amplifier element is connected to the first speaker data interface through the second magnetic bead module 500.

In summary, the high-frequency clock signal generated during the wired transmission of target data by the earphone 001 provided by the present disclosure not only radiates electromagnetic waves of the same frequency but also radiates a set of harmonics whose frequencies are multiples of the frequency of the clock signal. For harmonics of higher frequencies, the shorter first ear hook line 120 may become an antenna for outward emission of the harmonics of higher frequencies. Therefore, the earphone provided by the present disclosure includes the second magnetic bead module 500 disposed between the communication unit and the first core unit, to at least partially block the second radio electromagnetic radiation emitted outward from the first ear hook line 120 due to the harmonic signal of the clock signal.

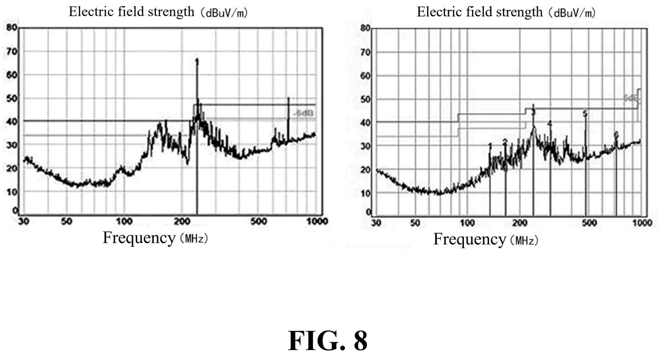

FIG. 8 is a schematic diagram illustrating an exemplary comparative test of an earphone according to some embodiments of the present disclosure. The horizontal axis of the chart represents a frequency of an electromagnetic wave. The vertical axis represents an electric field strength measured at a distance of 3 meters from the earphone under test. The left chart is a test chart before the first magnetic bead module and the second magnetic bead module are installed. The right chart is a test chart after the first magnetic bead module and the second magnetic bead module are installed. By comparison, after the two magnetic bead modules are installed, a good suppression effect is achieved for the electromagnetic waves of 240 MHz and 720 MHz, causing the electromagnetic radiation of the earphone to be lower than the constraint value in the current electromagnetic compatibility standard.

According to some embodiments of the present disclosure, the earphone includes the first magnetic bead module disposed between the first earphone module and the second earphone module, to at least partially block the first radio electromagnetic radiation from being emitted outward via the wire. Furthermore, the earphone provided by the present disclosure includes the second magnetic bead module disposed between the communication unit and the first core unit, to at least partially block the second radio electromagnetic radiation from being emitted outward via the first ear hook line. Consequently, when the earphone provided by the present disclosure performs high-speed wired data transmission, its outward radiated electromagnetic interference is controlled within the range specified by the general standard.

The foregoing describes specific embodiments of the present application. Other embodiments are within the scope of the appended claims. In some cases, the actions or steps recited in the claims may be performed in an order different from that in the embodiments and still achieve the desired results. In addition, the processes depicted in the accompanying drawings do not necessarily require showing a specific order or sequential order to achieve the desired results. In some embodiments, multitasking and parallel processing are also possible or may be advantageous.

In summary, after reading the present detailed disclosure, those skilled in the art will understand that the foregoing detailed disclosure is presented by way of example only and may not be limiting. Although not explicitly stated herein, those skilled in the art will understand that the present application is intended to cover various reasonable changes, improvements, and modifications to the embodiments. These changes, improvements, and modifications are intended to be proposed by the present application and are within the spirit and scope of the exemplary embodiments of the present disclosure.

Furthermore, certain terms in the present disclosure have been used to describe the embodiments of the present disclosure. For example, "an embodiment," "embodiment," and/or "some embodiments" mean that the specific feature, structure, or characteristic described in connection with the embodiment may be included in at least one embodiment of the present disclosure. Therefore, it may be emphasized and should be understood that two or more references to "an embodiment" or "one embodiment" or "an alternative embodiment" in various portions of the present disclosure do not necessarily all refer to the same embodiments. Furthermore, particular features, structures, or characteristics may be appropriately combined in one or more embodiments of the present disclosure.

It should be understood that in the foregoing description of embodiments of the present disclosure, to aid in understanding one feature, the present disclosure combines various features in a single embodiment, drawing, or description thereof for the purpose of simplifying the present disclosure. However, this does not mean that the combination of these features is necessary. Those skilled in the art, when reading the present disclosure, may well extract a portion of the devices as separate embodiments for understanding. That is, the embodiments in the present disclosure may also be understood as an integration of multiple sub-embodiments. The content of each sub-embodiment is also valid when it includes fewer than all features of a single aforementioned disclosed embodiment.

Each patent, patent application, publication of a patent application, and other material, such as articles, books, specifications, publications, documents, and items, cited herein may be incorporated by reference for all purposes now or later associated with this document, except for any prosecution history documents related thereto, any identical ones that may be inconsistent or conflict with this document, or any identical prosecution history documents that may have a limiting effect on the broadest scope of the claims. Furthermore, if there is any inconsistency or conflict between the description, definition, and/or use of terms associated with any incorporated material and the terms, description, definition, and/or use in this document, the terms in this document shall prevail.

Finally, it should be understood that the embodiments of the present disclosure disclosed herein are illustrative of the principles of the embodiments of the present disclosure. Other modified embodiments are also within the scope of the present disclosure. Therefore, the embodiments disclosed in the present disclosure are merely by way of example and not limitation. Those skilled in the art may adopt alternative configurations according to the embodiments in the present disclosure to implement the application in the present disclosure. Therefore, the embodiments of the present disclosure are not limited to the embodiments precisely described in the present disclosure.

## Claims

1. An earphone, comprising:

   a first earphone module, comprising a data transmission unit, wherein the data transmission unit transmits target data with an external environment via a wired transmission during operation;
   a second earphone module, electrically connected to the first earphone module via a wire; and
   a first magnetic bead module, disposed between the first earphone module and the second earphone module to at least partially block first radio electromagnetic radiation emitted outward from the wire due to the wired transmission.

2. The earphone according to claim 1, wherein a ratio of a wavelength of the first radio electromagnetic radiation to a length of the wire is in a range of 3.7 to 4.3.

3. The earphone according to claim 1 or 2, wherein a frequency of the first radio electromagnetic radiation is in a range of 220 MHz to 260 MHz, and the length of the wire is in a range of 27 cm to 37 cm.

4. The earphone according to any one of claims 1-3, wherein the first magnetic bead module comprises at least one magnetic bead, and an impedance of the at least one magnetic bead reaches a peak value in a frequency range of 220 MHz to 800 MHz.

5. The earphone according to any one of claims 1-4, wherein the data transmission unit comprises:

a data transmission interface;
a storage, storing the target data; and
a data input-output circuit, electrically connected to the data transmission interface and the storage, wherein the wired transmission of the target data comprises: the data input-output circuit receiving the target data sent by the external environment via the data transmission interface in a wired manner, or transmitting the target data to the external environment via the data transmission interface in a wired manner.

6. The earphone according to claim 5, further comprising a signal shield at least partially covering the data input-output circuit to at least partially block external radiation generated during the wired transmission of the target data.

7. The earphone according to any one of claims 1-6, wherein

the first earphone module comprises a communication unit and a first core unit; and
the second earphone module comprises a power supply unit and a second core unit, wherein the first magnetic bead module is connected to the communication unit to at least partially block at least a portion of the first radio electromagnetic radiation generated by the wire due to a clock signal generated by the communication unit.

8. The earphone according to claim 7, wherein

the second earphone module further comprises a power temperature detector and a key;
the communication unit comprises at least one of: a power interface, a power temperature detection signal interface, a key signal interface, or a second speaker data interface; and
the first magnetic bead module comprises at least one of: a first magnetic bead unit, a second magnetic bead unit, a third magnetic bead unit, or a fourth magnetic bead unit, wherein

the first magnetic bead unit is connected to the power supply unit via the power interface;
the second magnetic bead unit is connected to the power temperature detector via the power temperature detection signal interface;
the third magnetic bead unit is connected to the key via the key signal interface; and
the fourth magnetic bead unit is connected to the second core unit via the second speaker data interface.

9. The earphone according to claim 8, wherein

the power interface comprises a positive electrode interface and a ground interface; and
the second speaker data interface comprises a second speaker data positive electrode interface and a second speaker data negative electrode interface, wherein

at least one magnetic bead in the first magnetic bead unit is connected to the positive electrode interface,
at least one magnetic bead in the first magnetic bead unit is connected to the ground interface,
at least one magnetic bead in the fourth magnetic bead unit is connected to the second speaker data positive electrode interface, and
at least one magnetic bead in the fourth magnetic bead unit is connected to the second speaker data negative electrode interface.

10. The earphone according to claim 8 or 9, wherein the communication unit comprises a control element and an amplifier element electrically connected with each other, wherein

the control element is connected to at least one of the power interface, the power temperature detection signal interface, or the key signal interface via the first magnetic bead module; and
the amplifier element is connected to the second speaker data interface via the first magnetic bead module.

11. The earphone according to any one of claims 7-10, wherein

the power supply unit comprises a battery;

the communication unit and the first core unit are connected via a first ear hook line; and

the power supply unit and the second core unit are connected via a second ear hook line.

12. The earphone according to claim 11, further comprising a second magnetic bead module, disposed between the communication unit and the first core unit to at least partially block second radio electromagnetic radiation emitted outward from the first ear hook line due to a harmonic signal of the clock signal, wherein

the first earphone module further comprises at least one of a first microphone or a second microphone;

the communication unit further comprises at least one of: a first microphone interface, a second microphone interface, or a first speaker data interface; and

the second magnetic bead module comprises at least one of a fifth magnetic bead unit, a sixth magnetic bead unit, or a seventh magnetic bead unit, wherein

the fifth magnetic bead unit is connected to the first microphone via the first microphone interface;

the sixth magnetic bead unit is connected to the second microphone via the second microphone interface; and

the seventh magnetic bead unit is connected to the first core unit via the first speaker data interface.

13. The earphone according to claim 12, wherein

the first microphone interface comprises a microphone positive electrode interface, a microphone ground interface, a first microphone data positive electrode interface, and a first microphone data negative electrode interface;

the second microphone interface comprises a second microphone data positive electrode interface and a second microphone data negative electrode interface; and

the first speaker data interface comprises a first speaker data positive electrode interface and a first speaker data negative electrode interface, wherein

at least one magnetic bead in the fifth magnetic bead unit is connected to the microphone positive electrode interface;

at least one magnetic bead in the fifth magnetic bead unit is connected to the microphone ground interface;

at least one magnetic bead in the fifth magnetic bead unit is connected to the first microphone data positive electrode interface;

at least one magnetic bead in the fifth magnetic bead unit is connected to the first microphone data negative electrode interface;

at least one magnetic bead in the sixth magnetic bead unit is connected to the second microphone data positive electrode interface;

at least one magnetic bead in the sixth magnetic bead unit is connected to the second microphone data negative electrode interface;

at least one magnetic bead in the seventh magnetic bead unit is connected to the first speaker data positive electrode interface; and

at least one magnetic bead in the seventh magnetic bead unit is connected to the first speaker data negative electrode interface.

14. The earphone according to claim 12 or 13, wherein the communication unit comprises a control element and an amplifier comment electrically connected with each other, wherein

the control element is connected to at least one of the first microphone interface or the second microphone interface through the second magnetic bead module; and

the amplifier element is connected to the first speaker data interface through the second magnetic bead module.

15. The earphone according to any one of claims 1-14, further comprising a connecting portion to connect the first earphone module and the second earphone module, the connecting portion comprising:

an elastic bracket;

the wire, extending along the elastic bracket; and

an insulating layer, wrapping the elastic bracket and the wire.

001

**FIG. 1**

300

**FIG. 2**

15

**FIG. 3**

**FIG. 4**

**FIG. 5**

**FIG. 6**

**FIG. 7**

**FIG. 8**

## INTERNATIONAL SEARCH REPORT

| International application No. |
| --- |
| **PCT/CN2023/143666** |

**A.    CLASSIFICATION OF SUBJECT MATTER**

H04R 1/10(2006.01)i

According to International Patent Classification (IPC) or to both national classification and IPC

**B.    FIELDS SEARCHED**

Minimum documentation searched (classification system followed by classification symbols)

IPC：H04R

Documentation searched other than minimum documentation to the extent that such documents are included in the fields searched

Electronic data base consulted during the international search (name of data base and, where practicable, search terms used)

CNABS, CNTXT, VEN, USTXT, EPTXT, WOTXT, CNKI, IEEE: 耳机, 耳塞, 磁珠, 电磁, 干扰, 辐射, headset, headphone, earphone, earbud, ferrite bead, magnetic bead, electromagnetic, interference, radiation

**C.    DOCUMENTS CONSIDERED TO BE RELEVANT**

| Category* | Citation of document, with indication, where appropriate, of the relevant passages | Relevant to claim No. |
| --- | --- | --- |
| Y | CN 105704597 A (NANJING QINGJIN INFORMATION TECHNOLOGY CO., LTD.) 22 June 2016 (2016-06-22) description, paragraphs [0009]-[0106], and figures 1-3 | 1-15 |
| Y | CN 217935887 U (GUANGDONG OPPO MOBILE TELECOMMUNICATIONS CORP., LTD.) 29 November 2022 (2022-11-29) description, paragraphs [0004]-[0089], and figures 1-5 | 1-15 |
| A | CN 208445714 U (SHANGHAI WUHANG AVIATION TECHNOLOGY CO., LTD.) 29 January 2019 (2019-01-29) entire document | 1-15 |
| A | US 2009262970 A1 (SAMSUNG ELECTRONICS CO., LTD.) 22 October 2009 (2009-10-22) entire document | 1-15 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **20 September 2024** | **23 September 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/143666**

| Patent document cited in search report | | | Publication date (day/month/year) | Patent family member(s) | | | Publication date (day/month/year) |
|---|---|---|---|---|---|---|---|
| CN | 105704597 | A | 22 June 2016 | None | | | |
| CN | 217935887 | U | 29 November 2022 | None | | | |
| CN | 208445714 | U | 29 January 2019 | None | | | |
| US | 2009262970 | A1 | 22 October 2009 | KR | 20090111382 | A | 27 October 2009 |
| | | | | KR | 100999856 | B1 | 13 December 2010 |
| | | | | EP | 2112839 | A2 | 28 October 2009 |
| | | | | EP | 2112839 | A3 | 07 December 2011 |
| | | | | EP | 2112839 | B1 | 20 February 2013 |

Form PCT/ISA/210 (patent family annex) (July 2022)